# EUROPEAN PATENT APPLICATION

(11) **EP 4 642 050 A1**
(43) Date of publication of application: **29.10.2025**
(21) Application number: 25159831.4
(22) Date of filing: 25.02.2025
(51) Int. Cl.: H04R 1/10, H04R 5/033

(54) **A SYSTEM AND A METHOD OF SWITCHING CONNECTIONS**

(30) Priority: 26.04.2024 EP 24172757
(71) Applicant: BANG & OLUFSEN A/S, 7600 Struer (DK)
(72) Inventor: Magnussen, Magnus Søgaard, 7600 Struer (DK); Eghoff, Pil Skov, 7600 Struer (DK)
(74) Representative: Inspicos P/S

(57) **Abstract**

A method for switching connections between a main device and a plurality of sources, the method comprising providing a list of sources, establishing connections between the main device and one or more first sources on the list of sources, receiving a first signal from one of the first sources and outputting from the main device a corresponding sound, receiving an input signal, disconnecting the main device from at least one of the first sources, connecting the main device to a second source on the list of sources which is not a first source. Thus, the main device, such as a headset, may switch streaming source by the operation of a switch on the headset.

## Description

The present invention relates to a system and a method of switching connections such as connections from a main device to a number of sources so that a connected source may be replaced by operation of the main device.

In a first aspect the present invention relates to a method for switching connections between a main device and a plurality of sources, the method according to claim 1.

In the present context, the main device is configured to receive a first signal and output a corresponding sound. The main device may be wearable, for example a headphone, a headset, hearing aid, smart watch, earbuds, EarPods or the like. Alternatively, the main device may be a speaker not configured to be worn, such as a Bluetooth speaker. The first signal received by the main device may be an audio signal, which may be configured to be converted into a corresponding sound. An audio signal may be transmitted as a file or streamed to the main device. The corresponding sound would typically be the audio represented by the audio signal. Other signals may trigger audio notifications prestored in the main device. For example, a low power situation in a source may bring the source to transmit a corresponding signal to the main device, causing the main device to retrieve the corresponding notification and play the corresponding sound.

The main device may receive the first signal by a wireless communication. Therefore, the main device may be configured for wireless communication. There are many examples of wireless communication such as Bluetooth, WiFi, Infrared, radio waves, NFC. The main device may also be able to output data/signals such as audio files.

In the present context, each of the sources are configured to transmit a signal to the main device. Often a source is a device comprising, or capable of locally accessing, one or more audio files and/or has access to audio files from more remote locations, such as via the internet, such as when engaging with streaming services. Therefore, each of the sources of the plurality of sources may be configured for wireless communications. Preferably, all the sources communicate with the same type of wireless communications as that utilised by the main device. The sources may be laptops, PCs, mobile phones, smart TVs, smart watches, tablets, SatNav, vehicles, baby monitors, audio/video streamers or the like. The sources may all be of the same type, e.g., multiple laptops, or of different types, e.g., a laptop, a phone etc.

The plurality of sources may be any number of sources, such as potentially the number of sources the main device has ever been connected to. Therefore, the number of the plurality of the sources may be 10 or more, 20 or more, 50 or more, 100 or more.

The main device may be connected to one or two or more sources, hereby named the first source(s), of the plurality of sources. In this context, connected means that the main device enters a connected mode vis-à-vis each connected source, and each source remains in this mode until the connection to that source is cancelled. The main device may comprise a processor and the processor may enter this connected mode when the main device is connected to one of the first sources.

Moreover, whilst the main device is connected to the first source(s) the main device sends a first predetermined signal to each first source until the connection with that first source is cancelled (disconnected). Thus, the main device may disconnect from one of the first sources, while maintaining connections with each of the other first sources.

In this context the first predetermined signal may be information sent to each of the first source(s) from the main device. The first predetermined signal may comprise information regarding an address of the main device, a unique ID or the like. Note that the first predetermined signal forwarded to one of the first sources may vary from that forwarded to another first source. For example, the first predetermined signal sent to each first source may comprise a unique ID that is different and unique to each of the first sources. Different sources may require different first information for them to maintain forwarding of the first signal from the sources. Different sources may communicate on different standards involving different types of first predetermined signal.

The first predetermined signal may be a continuous stream of data, signal or the like and therefore in this case the predetermined signal may be transmitted to some of or each of the first sources until the connection with one of the first sources is cancelled or disconnected, whereby the first predetermined signal is then no longer transmitted to that first source. In this case, the first predetermined signal may still be streamed to some of or each of the other first sources that the main device is still connected to.

Alternatively, the first predetermined signal may be a packet of data, piece of data, or the like which is sent periodically to the first source(s). The period may be 0-5 seconds, such as 0.1-5 seconds, such as 1-5 seconds or 0.5-2 seconds, such as 0.1 - 0.5 seconds or the like. In this case, once the main device is disconnected from the first source(s), the first predetermined signal is no longer sent periodically to that first source. The first predetermined signal would still be sent periodically to each of the other first sources that the main device is still connected to.

Further alternatively, the first predetermined signal may be a packet or piece of data sent intermittently, such as in response to the main device receiving a signal from the first source(s). In this case, the main device may keep responding to signals/data/information/notifications received from each of the first source whilst connected to the first sources and stop responding to one of the first sources when the main device disconnects from that first source.

The main device may only respond to a first source from which it receives the signals/data/information/notifications, rather than each of the first sources it is connected to. The main device may also only respond to signals of a certain type received from one of the first sources, such as requests for response. In this case the main device may also only reply to the first source from which the signal was received, although it may also respond to each of the first sources.

Whilst a first source and the main device are connected, they may periodically exchange a handshake, data, signal or the like to ensure data transmission is still possible. Therefore, the first predetermined signal may be the part of a handshake sent from main device to one of, some of or each of the first sources. The first predetermined signal may be a second part of the handshake sent in response to a first part of the handshake sent by a first source. In this case the first predetermined signal/second part of the handshake may only be sent to the one of the first sources that initiated the handshake. Alternatively, the first predetermined signal may be the first part of the handshake, in which case the first predetermined signal may be sent to the first source to which the main device is connected.

The first source(s) and main device may periodically exchange the handshake, where the period may be 0-5 seconds such as, 0.1 - 0.5 seconds 0.5-1 second, 1-2 seconds, 2-5 seconds or the like.

Additionally, a connected source may send data, such as audio files, to the main device. The number of connected sources may depend on the communication standard, receiving capability of the main device, or the like. Therefore, the number of connected sources may be 1, 2, 3, 5 or 10, or the like.

A connected source may transfer data to and receive data from the main device, where the transfer of data between the source and main device may be synchronized to a common clock and/or a hopping sequence. Note the hopping sequence may describe a sequence of frequencies at which the source and main device exchange information whilst the connection is maintained. The source and main device may use the method 'Frequency-hopping spread spectrum' to exchange information.

In this context, establishing a connection to a source means that the main device begins to transmit the first predetermined signal to the first source . As part of establishing a connection, the main device may also exchange preliminary data with each of the first sources, such as data to be used for further signal transport, such as encryption keys, IP address, passcodes, serial numbers, device type, device name, manufacturer ID, product ID, hopping sequence, clock speed, or the like.

If the main device is connected to a single first source, the first signal received from that source forms the basis of the corresponding sound output from the main device. If the main device is connected to multiple first sources, the first signal received from one of the first sources forms the basis of the corresponding sound. The source which is outputting the first signal that forms the basis of the corresponding sound may be referred to as the active source.

In the instance that more than one of the first sources are connected to the main device, a method and/or system of allowing the main device to determine which signal from which first source should form the basis of the corresponding sound whilst simultaneously maintaining connection with multiple first sources may be required. When using such a method and/or system, the main device may be receiving a first signal from one of the first sources which forms the basis of the corresponding sound. The method and/or system may comprise rules for switching which source's first signal is to form the basis of the outputted sound. In other words, the rules define which of the connected sources is the active source. An example of this method/system is Bluetooth Multi-point which is a feature of the Bluetooth technology that is known to those skilled in the art.

Naturally, also other communication standards will enable the main device to be connected to multiple sources at the same time, so the above is not delimited to Bluetooth Multi-point, it may also be based on, for example RF technology, NFC, or the like.

The rules may also define which signal from which source should form the basis of the outputted sound. In other words, the rules may define which signal has priority. The priority could be based on a type of signal received by the main device (e.g., notification of a phone call may have priority over an audio signal). Alternatively, or additionally, the priority could be based on the identity of the source sending the signal. The rules may be configured depending on the application of the main device, the design of such rules being known to those skilled in the art. The rules may be static, or the rules may be configured to be changed depending on, for instance, the time of day, location or the like. A list of sources is provided. The list may be provided, or stored, in the main device, in a source and/or in a separate device in communication with the main device. In this context, providing may mean that the main device collects information regarding the sources, such as sources it can connect with or has previously been connected to. The list of sources may comprise sources in the physical vicinity of the main device, such as sources outputting signals. The list of sources may have been inputted by a user. The list of sources may also comprise sources that have undergone an authorisation process with the main device, these sources may be termed paired or trusted sources. The list of sources could be ordered, the sources on the list of sources could be grouped, cf. below.

Then, the list of sources may vary over time, such as when new sources are paired with the main device and/or if the main device is not at stand-still and new sources come within range of the main device.

The main device receives an input signal. In this context an input signal may be received from a sensor or detector on the main device or may be received, for example, wirelessly from a source or another device in communication with the main device. The input signal may be from an external source, such as another source on the list of sources. The input signal may be user activated such as where the user operates the sensor or detector.

The main device disconnects from at least one of the first sources, as a result of receiving the input signal.

In this context, to disconnect means that the main device stops sending/transmitting the predetermined signal to the source. Therefore, disconnect may mean that the first predetermined signal is no longer sent to this source periodically, continuously, or in response to incoming signals. Additionally, disconnected means that the main device is no longer in connected mode vis-à-vis this source.

Disconnect may also mean that the source and main device do not exchange data on the same channel where the clock speed and hopping frequency are synchronised. Furthermore, when the source and the main device are disconnected, they may no longer exchange periodic handshakes/signals/data. Disconnect may also mean that the main device stops receiving a first signal from the source and the main device stops outputting sound corresponding to a first signal from the disconnected source.

Moreover, disconnect may mean that the first source and the main device exchange information detailing that a disconnection has taken place, and perhaps the reason for the disconnection, such as in this case, the receiving of an input signal. It should be noted, that either the first source or the main device, or both, is/are capable of sending the information regarding the disconnection. The information regarding the disconnection may also be attempted to be exchanged if the main device and/or first source move physically out of range, run out of battery, crash, are damaged or the like. In this instance, one device may send information detailing disconnection for unknown reasons. After the exchange of information regarding the disconnection, data is not sent between the source and the main device until another connection is reestablished.

The main device connects to a source, hereby named the second source, on the list of sources and which is not a first source. In other words, the main device connects to a source different from the disconnected source and different from all first sources.

In this context, the main device connects to the second source by entering the connected mode vis-à-vis this source and thus initiating transmission of a, second, predetermined signal to the second source.

The second predetermined signal may be the same type, frequency or the like as the first predetermined signal, or it may be a different type, frequency or the like.

Alternatively, information comprised in the second predetermined signal may be different to that of the first predetermined signal. For example, the first predetermined signal may comprise a unique ID which is different to a unique ID comprised in the second predetermined signal.

It may be desired to disconnect the at least one first source before connecting to the second source. This is relevant in e.g. situations where the main device is able to be connected to a limited number of sources and if, before disconnection, the number of connected first sources is at a maximum.

In some situations, the main device thereafter receives a second signal from the second source, where step c then comprises outputting a sound corresponding to the second signal. In other situations, step c will maintain outputting a sound corresponding to the first signal received from a first source which is not disconnected.

The main device may comprise a wireless transceiver, a sound generator, a controller, a powerpack, a battery, a charging cable, a storage and/or a memory or the like.

In one embodiment, the list of sources comprises sources that have previously been authorised to transfer data to the main device. In a Bluetooth setting this could be paired sources. The authorisation may be an initial setting up of conditions allowing, later on, a swift initiation of communication. Thus, encryption keys, IDs and the like may be exchanged in order to not require that at a later stage.

In one embodiment, the list of sources is an ordered list of sources and wherein step f comprises selecting the second source based on its position in the order. Thus, when selecting the second source, it may be selected as the highest source, in the order, which is not a first source.

In one situation, one source may be a favourite source so that, if this is not a first source, this will be selected to be the second source.

In yet another embodiment, or in addition to another embodiment, the list of sources comprises groups of sources and wherein step f comprises selecting the second source by selecting a group of sources and selecting the second source as a source from within the selected group. Then, a group of sources may be sources available or relevant/desired in a particular setting where another group is relevant/desired in another setting. One setting may be a work situation where e.g. a work PC or streaming service available at the workplace may be relevant sources. Other sources may be relevant or desired in a home situation or a work-out situation or during commuting. Groups may alternatively or additionally be selected based on other parameters, such as time of day, weekday, GPS coordinate, mood or the like. Thus, even though a source of another group may be available for connection, it may not be selected as the second source if the setting is not for a group in which that source is provided. The setting, location or the like may be determined by a detector or sensor of the main device, such as a GPS sensor, a clock, or the like. Alternatively, such detector or sensor may form part of a device, such as a mobile phone, with which the main device communicates.

In fact, the ordering of the list of sources may also depend on the setting, so that the order varies depending on the setting, location or the like, of the main device or a device with which it may communicate.

The ordering and/or grouping may be performed by a user, such as by operating a device, such as a mobile phone, pad, laptop or the like, in communication with the main device. Having ordered/grouped the list, it may be uploaded to the main device if desired.

There may be some instances where the audio connection is disconnected (the active source no longer receives and plays audio) but the source may establish a link which may form an alternative communication between the source and the main device. This may be beneficial if, for instance, the active source has the capability to communicate with the main device to order/group the list of sources. Maintaining a link may allow a source to alter the list of sources while allowing other source to establish a connection (and thus transmit audio to the main device).

As described above, the receiving of the first signal preferably takes place via a wireless connection, as cabled connections are cumbersome and limiting.

In a particularly relevant embodiment, the input signal may be generated by an input element which is user activated or facilitated. A user activated or facilitated input signal may be generated by a sensor or detector, such as a push button, lever, touch pad, or the like, or via a microphone, camera, eye tracker or the like, where the user may operate or react in a recognisable manner so that the input signal may be determined and acted upon.

The input element may be provided on the main device, a source and/or a device in communication with the main device. In one situation, the main device is an earbud in communication with a casing which, as an alternative, may also be used for storing and charging the earbud. Then, part of the operation of the main device may be provided in the casing, as the amount of space, storage, processing power, available power and the like in the earbud may be limited. The earbud may be communicating with the casing which may then e.g. store the list of sources and which may also communicate with the sources. The casing may then also comprise the input element if desired.

As described above, the input signal may give rise to the disconnection and connection, so that a user may, by providing the input signal, cause the connection and disconnection. As described above, connecting to the second source may cause the sound generated to correspond to the second signal received from the second source.

Alternatively, a first source from which a first signal is received, the first signal forming the basis of the sound output, remains the active source, after connection of the second source, so that the signal from this source keeps being that on which the sound is based.

In this latter situation, after connection, the connected second source may then be readily exchanged by the active first source if desired, using Bluetooth Multi-point functionality or similar technology. For example, the second source may interrupt sound from the active first source if required, such as if the second source is a mobile phone receiving a call or text message, whereby a signal therefrom may cause the main device to interrupt the sound generation based on the active first source and then output sound corresponding to the signal from the second source. The relevant rules for switching active sources may be defined within the active device exchange functionality (e.g. Bluetooth Multi-point or the like) and are configured depending on the application.

In another embodiment the input signal may be received from a source via a link. The link may be an alternative communication between a source and the main device that may have a lower bandwidth, energy consumption, or the like, than the aforementioned connection. The source may output the input signal in the case of an event, such as if the source detects that it, i.e., the source, is in a new location. The source may also output the input signal if the source detects a change in time (i.e., it has become 6pm.) Note that the input signal may also be received from a source via the connection.

In another embodiment, the input signal is generated by the main device in a response to an event and/or change in state experienced by the main device. For example, the input signal may be generated as a response to the main device detecting a change in location of the main device or that the main device has entered or left a predetermined location. Alternatively, the input signal may be generated as a response to the detection of a point in time or a period of time, for instance if the main device detects that it is noon, or no longer noon (or the like). Further, the input signal may be generated as a response to the main device detecting an available source, for instance if the source activates and/or moves into a sufficient physical vicinity of the main device.

Another aspect of the invention relates to a system for switching connections between a main device and a plurality of sources, the system according to claim 11.

In this context, the main device, the sources, the list of sources, the establishment of a connection, the reception of the first signal, the first signal, the connection and disconnection, the first and second sources and the first and second predetermined signal may be as described in relation to the first aspect of the invention.

Clearly, any embodiment, situation, consideration and the like described in relation to the first aspect is equally relevant to the second aspect of the invention.

As described above, the main device may be a headset, earbud, wearable, speaker or the like. The receiver thereof preferably is configured for wireless communication, such as WiFi, NFC, Bluetooth, 5G, 4G, UWB or the like. The receiver thus may comprise all relevant components, such as for example an antenna, storage or the like.

The sound generator may be a loudspeaker, or the like, and may be based on any technology, such as moving coil, moving magnet, MEMS, Piezo crystals or the like.

The system comprises an input element which preferably is a user operable input, such as a push button, lever, touch pad, or the like. The input element generates the input signal. The input element and signal may be as described above in relation to the first aspect of the invention.

As described above, the list of sources may be a list of sources which are authorised to transmit signals to the main device. Thus, the main device may comprise a controller configured to perform such an initial authorisation, such as a pairing with a Bluetooth source, and to enter that source on the list. The initial authorisation during pairing may consist of the source and the main device exchanging additional data, i.e., data in addition to that exchanged during the establishment of a connection.

The controller may also be used for the above-mentioned grouping and/or ordering - or for handling an ordered/grouped list received from another device. Adding a favourite source also may be handled by the controller or information to that effect may be received from another device.

As mentioned above, the ordering or grouping may be determined by a setting of the main device or a device which the main device may communicate with. The main device thus may comprise a GPS tracker, a clock, or the like. Also, a workplace may be identified by its WiFi network being available, so also information of this type may be used for determining a setting.

In one situation, an identity of the second source may be determined, and a corresponding sound may be output by the sound generator. This sound may be entered by the user via a microphone, or it may be typed into a device and then converted in a text-to-speech conversion, whereafter the corresponding audio file can be transferred to the device or main device for playback when that source is selected.

In the following, preferred embodiments are described with reference to the drawing, wherein:
Fig. 1 illustrates a first embodiment of the system of the invention,
Fig. 2 illustrates a list of sources, and
Fig. 3 illustrates a flow chart of a preferred embodiment of the method of the invention.

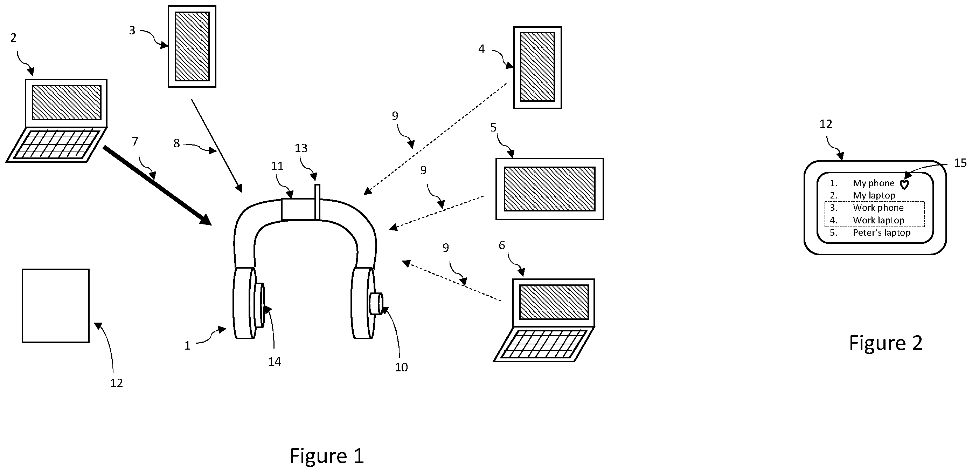

Figure 1 shows an example embodiment of the system. In this embodiment the main device, 1, may be a set of headphones, such as with Bluetooth capabilities. In alternative embodiments it may be a set of speakers, headset, earbuds or the like. The headphones may be wireless and comprise a battery. They may also utilise a charging cable and be able to be used whilst charging. Other wireless communication methods exist, such as WiFi, Infrared, radio waves, UWB, NFC or the like and may be used instead of Bluetooth. The main device 1 may comprise a controller 11, such as a microcontroller to control its communication to other devices and/or sources. It may also comprise a receiver 13, and a sound generator 14.

Figure 1 shows that the main device 1 is paired with a plurality of sources, 2, 3, 4, 5, and 6, with Bluetooth capabilities. Devices and/or sources connected in a Bluetooth network communicate with each other using ultra-high frequency (UHF) radio waves. The main device 1 receives data via its receiver 13. For information to be passed between Bluetooth devices and/or sources, the devices and/or sources may be required to be physically close together. These devices and/or sources may be, a computer, laptop, phone, tablet, smart TV, watch, household appliance, SatNav, video game console, baby monitor, or the like. In the illustrated embodiment, the plurality of sources are configured to output audio signals. The main device 1 may comprise a sound generator 14 to convert audio files into sound. The sources may also be capable of outputting other forms of data, such as video. To pair two Bluetooth devices and /or sources, the devices and/or sources must be in close proximity to each other. It may be required that a password, code, QR code or another form of authentication, for example a button or switch press, must be utilised before the devices and/or sources exchange encryption keys needed for the devices and/or sources to be configured to communicate with each other.

In other words, the devices and/or sources may be required to be proven trustworthy before data can be exchanged between each other. In many examples, the authentication of the pairing of two devices and/or sources needs only be done once, as the encryption keys are not deleted. Once the authentication has happened, every time the devices/sources are in close proximity, they can be connected and communicate with one another. To pair a device and a source, an additional app 12, computer program, device interface or the like may be required. Then, the controller 11 may facilitate the pairing of the device and source. Thus, the controller 11 may be able to send and receive signals, information and/or data from the additional app 12, computer program, device interface or the like.

In the embodiment shown in Figure 1, the main device 1, which comprises a chip with dual Bluetooth capabilities, allowing it to connect to two sources at once, is connected to both source 2 and source 3. This is symbolised in the figure with solid arrows showing the connection 7, 8. Note that in this embodiment, the main device 1 may be paired with many different sources but can only be connected to a maximum of two. The main device 1 has an active connection 7 with source 2. In other words, source 2 may be actively transmitting data to the main device 1. The active connection 7 is symbolised in Figure 1 by a thicker arrow than the other connection 8. The main device 1 receives the transmitted data through the receiver 13.

In the instance where the main device 1 is connected to two or more sources, a method/system allowing two or more sources to be connected to a main device at one time may be required. One source may be termed the active source, and it is this source from which the sound outputted from the main device is received. Such method/system may be Bluetooth Multi-point, although other methods/systems may be used. To switch between active sources, the Bluetooth Multi-point functionality comprises a set of rules, which may be used, for determining when and how the active sources are switched. The rules may be configured based on the actual application.

The transmitted data may be an audio file such as music, an audio book, a soundtrack to a video, a podcast, a radio show or the like. The active connection is symbolised in Figure 1 by a solid and thicker arrow symbolising the connection whereas paired, but not connected connections are indicated by dashed arrows.

In Figure 1, the source 3 is also connected to the main device 1. It is connected as a non-active source. Therefore, it may be connected to the main device 1 but not actively transmitting data (8). Protocols for switching between connected sources, i.e., changing which device is active at a given point in time are known, i.e., Bluetooth Multi-point. The controller 11 may facilitate this change. Note that for the two sources 2 and 3 to be connected to the main device 1, they must have first been paired and also be physically near the main device 1, especially if communicating over Bluetooth. For example, the user may be actively listening to music from source 2, when a SMS is received on source 3. A protocol, i.e., the rules outlined in the Bluetooth Multi-point, may dictate that source 3 temporarily becomes the active source, a text to audio file of the SMS may be generated and transmitted to the user and, once completed, source 2 becomes the active source again. Alternatively, source 3 may become temporarily active to transmit a short notification that an SMS has been received.

In another example the user may be actively listening to music on a journey on source 2 whilst running a navigation algorithm on source 3. Source 3 may temporarily become active to communicate a direction to the user, before source 2 becomes active again.

In Figure 1, sources 4, 5 and 6 are paired with the main device 1 but are not currently connected (9). This is symbolised by the dashed arrow between the paired sources and the main device 1.

This invention relates to the switching of which sources that are connected to the main device 1 from the plurality of paired sources. In the following paragraphs, there are examples of where switching between connected sources is beneficial.

For instance, the user may have been listening to music via his/her main phone (i.e., the active source), and also have his/her work phone connected in case of receiving a SMS or phone call. If the user finishes his/her work, he/she may wish to drive home and may therefore wish to disconnect the work phone, whilst still maintaining an active connection with the main phone. The user may want to connect to the SatNav but as an inactive source. In other words, they still wish to listen to music whilst they drive but receive directions when relevant.

In another example the user may finish driving, arriving at the destination and may wish to go for a run. In this example the user may wish to disconnect the SatNav as the inactive source and connect to a fitness watch instead. Thus, the user may continue the active connection with the main phone and connect the fitness watch as an inactive source. In other words, the user is still able to listen to music, but may receive updates about how far he/she has run, a heart rate, speed or the like from the fitness watch.

To initiate switching out connected sources, the main device 1 may comprise an input element 10, e.g., a button, switch, dial, touch point, lever, pull handle or the like so that it is activated in a simple movement, such as push, pull, touch, twist or the like. The input element 10 may generate an input signal. It may be located on the main device 1, or, in an alternative embodiment, it may be located on a remote control, the casing for the main device 1, or the like. It may be able to send and receive signals from the controller 11. It may also be able to receive signals from the receiver 13. Upon activation of the input element 10, an input signal may be generated and the process for switching the source connected to the main device 1 is initiated.

The controller 11 may already comprise an ordered list of paired sources or may receive it from an external source. The order of the list may relate to proximity (i.e. the closest source to the main device 1 is at the top of the list). It may relate to the order at which the sources were paired to the main device 1. It may relate to how often each source is the active source. It may be user selected.

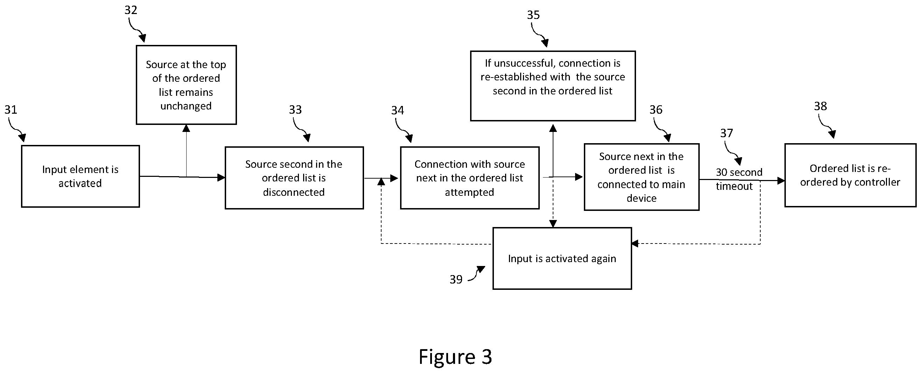

As described above, prior to activation of the input element 10, the main device 1 is connected to at least one source. It may also be connected to more sources. It may be actively receiving data from the active source 2, via the receiver 13. The receiver 13 sends this data to the controller 11 which in turn controls the sound generator 14 to convert the data to sound. In other words, the user is listening to the active source 2. Another source may be connected to the main device 1. This source, 3, is connected but not active. There are also sources that are paired but not connected. In this example, these are sources 4, 5 and 6. When the input element 10 is activated, the controller 11 receives an input signal from the input element 10 and firstly disconnects the inactive source from the main device 1. Next, the controller 11 determines a new source to attempt to connect to. If the new source is paired and in the vicinity of the main device 1, the controller 11 will connect with the different source as the new inactive source. This methodology is discussed in more detail later in this section, with regards to Figure 3.

In this embodiment it may be possible to assign a name to each of the paired sources. An example of this is shown in Figure 2. The name may be a text string, such as "work phone", "home phone", "work tablet", "phone 2", "Peter's laptop" or the like. Alternatively, it may be an audio clip of a voice speaking the name of the source. The aforementioned computer program 12, app, device interface or the like may be used to name the paired sources.

Additionally, as discussed above, it may be possible for the user to order the paired sources. To input or edit the order, the aforementioned computer program 12, app, device interface or the like may be used. This information may be then sent to the controller 11. The order may be based on user preference. It may be constant, or it may change throughout the day based on pre-recorded data related to the user. It may change based on location. If the order is to change based on time of day, location etc, the receiver 13 of the main device 1 may receive relevant data and the controller 11 may then re-order the sources based on this received information. If the controller 11 re-orders the paired sources, it may send this information to the computer program 12, app, device interface or the like so that the new order is able to be seen by the user.

Furthermore, in the preferred embodiment, it may be possible to favourite a source, i.e., the device that is in the top of the order, shown in figure 2 with a heart, i.e., 15.

There is also a possibility for the user to group sources. This may also be done using the computer program 12, app, device interface or the like. The user may choose to group sources based on location or function, such as home sources, work sources or the like. This is shown in Figure 2 by the dashed line surrounding work phone and work laptop. This implies that the two work sources are in a group.

As previously mentioned, the controller 11 may use the list of sources to determine which source to connect to, after the input element 10 has been activated and the inactive device disconnected. It may select the first source on the list that is not connected.

Note that if a source has been favourited, but it is inactive, it may be the case that the controller 11 disconnects the active source, in favour of maintaining a connection with the favourite source.

Figure 3 shows a flow chart for an example procedure of the source switching procedure. The source switching procedure starts 31 when the input element 10 is activated, e.g., by pressing a button, switch, using voice activation or the like. At this point it may be that two sources are connected to the main device 1. One may be active, that is, it is actively transmitting data to the main device 1 and the main device receives the data via the receiver 13. As previously mentioned, the controller 11 may then transfer this data to the sound generator 14 to be converted to sound. The other source may be inactive but connected.

The source at the top of the internal device order remains unchanged 32, in other words it will remain connected to the main device 1. It is most likely to be the active source, but it may also be a favorited source. Therefore, it is the source in the second position of the ordered list that is to be changed. It is likely that this source is connected to the main device 1 but may not be active. Alternatively, if a favorite source is in use, the source in the second position of the ordered list may be active. The source in the second position of the ordered list may now be disconnected 33 from the main device 1 by the controller 11.

The next step 34 in the procedure shown in Figure 3 may be for the main device 1 to attempt to connect to the source in position three of the ordered list via the controller 11. In this instance there is a first timeout value wherein the connection is attempted to be established. The timeout value may be 30 seconds. However, it may last, 5, 10 15, 20, 45, 50 seconds or a minute. It may be longer than a minute. It may be defined by the user. However, the connection may fail if, for example, the source in position three of the ordered list is out of range of the main device 1. Alternatively, the source in position three of the ordered list may be faulty and therefore unable to connect for that reason. In this instance in the next step 35, the main device 1 will attempt to reconnect to the source it was previously connected to.

After the main device 1 has connected to a new source 36, a second timeout 37 may occur before the ordered list is re-ordered by the controller 11 in step 38. In the preferred embodiment, the timeout lasts 30 seconds. However, it may last, 5, 10 15, 20, 45, 50 seconds or a minute. It may be defined by the user. The timeout may be required so that the ordered list is predictable to the user, even if, for example, the connected source switching procedure has been initiated several times in short succession. Note that the input may be activated again 39 before a new source has been connected to the main device 1, as shown in Figure 3.

## Claims

1. A method for switching connections between a main device and a plurality of sources, the method comprising:
a. providing a list of sources,
b. the main device establishing a connection with one or more first sources on the list of sources by initiating transmission of a first predetermined signal to each of the one or more first sources,
c. the main device receiving a first signal from one of the one or more first sources and outputting a corresponding sound,
d. receiving an input signal,
e. in response to the received input signal, disconnecting the main device from at least one of the one or more first sources by terminating the transmission of the first predetermined signal from the main device to the at least one of the one or more first sources,
f. in response to the received input signal, the main device establishing a connection with a second source on the list of sources which is not a first source by initiating transmission of a second predetermined signal to the second source.

2. The method according to claim 1 comprising the additional steps after step f:
g. receiving a second signal from the second source and
h. outputting from the main device a sound corresponding to the second signal.

3. The method according to claim 1, wherein the list of sources comprises sources that have previously been authorised to transfer data to the main device.

4. The method according to claim 1 and 2, wherein the list of sources is an ordered list of sources and wherein step f comprises selecting the second source based on its position in the order.

5. The method according to any of the preceding claims, wherein the list of sources comprises groups of sources and wherein step f comprises selecting the second source by selecting a group of sources and selecting the second source as a source from within the selected group.

6. The method according to any of the preceding claims wherein the receiving of the first and/or second signal takes place via a wireless connection.

7. The method according to any of the preceding claims, wherein the input signal is generated by a source and is received via a link, the link forming an alternative communication between the source and main device.

8. The method according to claim 7, wherein, in step e, the at least one disconnected source is reconnected via a link, the link forming an alternative communication between the source and main device.

9. The method according to any of claims 1-6, wherein the input signal is generated by a user operating an input element which is located on the main device or a casing thereof.

10. The method according to any of claims 1-6, wherein the input signal is generated by the main device in a response to an event and/or change in state experienced by the main device.

11. A system for switching connections between a main device and a plurality of sources, the system comprising:
a. the main device,
b. the plurality of sources,
c. an input element,
d. a receiver,
e. a sound generator
f. a controller configured to:
i. provide a list of sources,
ii. establish, via the receiver, a connection with one or more first sources on the list of sources by initiating transmission of a first predetermined signal to each of the one or more first sources,
iii. receive a first signal from one of the one or more first sources and control the sound generator to output a sound corresponding to the received first signal,
iv. receive an input signal from the input element and disconnect the main device from at least one of the one or more first sources by terminating the transmission of the first predetermined signal from the main device to the at least one of the one or more first sources,
v. connect the main device to a second source on the list of sources which is not a first source by initiating transmission of a second predetermined signal to the second source.

12. The system according to claim 11, wherein the receiver is configured for wireless communication with the sources.

13. The system according to claim 11 or 12, wherein the input element is a user operable manual input located on the main device or a casing thereof.

## Amended claims

### Amended claims in accordance with Rule 137(2) EPC.

1. A method for switching connections between a main device and a plurality of sources, the method comprising:
a. providing a list of sources,
b. the main device establishing a connection with one or more first sources on the list of sources by initiating transmission of a first predetermined signal to each of the one or more first sources,
c. the main device receiving a first signal from one of the one or more first sources and outputting a corresponding sound, and
d. receiving an input signal,
**characterized in that** the method further comprises the steps of
e. in response to the received input signal, disconnecting the main device from at least one of the one or more first sources by stopping the transmission of the first predetermined signal from the main device to the at least one of the one or more first sources,
f. in response to the received input signal, the main device establishing a connection with a second source on the list of sources which is not a first source by initiating transmission of a second predetermined signal to the second source.

2. The method according to claim 1 comprising the additional steps after step f:
g. receiving a second signal from the second source and
h. outputting from the main device a sound corresponding to the second signal.

3. The method according to claim 1, wherein the list of sources comprises sources that have previously been authorised to transfer data to the main device.

4. The method according to claim 1 and 2, wherein the list of sources is an ordered list of sources and wherein step f comprises selecting the second source based on its position in the order.

5. The method according to any of the preceding claims, wherein the list of sources comprises groups of sources and wherein step f comprises selecting the second source by selecting a group of sources and selecting the second source as a source from within the selected group.

6. The method according to any of the preceding claims wherein the receiving of the first and/or second signal takes place via a wireless connection.

7. The method according to any of the preceding claims, wherein the input signal is generated by a source and is received via a link, the link forming an alternative communication between the source and main device.

8. The method according to claim 7, wherein, in step e, the at least one disconnected source is reconnected via a link, the link forming an alternative communication between the source and main device.

9. The method according to any of claims 1-6, wherein the input signal is generated by a user operating an input element which is located on the main device or a casing thereof.

10. The method according to any of claims 1-6, wherein the input signal is generated by the main device in a response to an event and/or change in state experienced by the main device.

11. A system for switching connections between a main device (1) and a plurality of sources (2, 3, 4, 5, 6), the system comprising:
a. the main device,
b. the plurality of sources,
c. an input element (10),
d. a receiver (13),
e. a sound generator (14) and
f. a controller (11) configured to:
i. provide a list of sources,
ii. establish, via the receiver, a connection with one or more first sources on the list of sources by initiating transmission of a first predetermined signal to each of the one or more first sources,
iii. receive a first signal from one of the one or more first sources and control the sound generator to output a sound corresponding to the received first signal, and
iv. receive an input signal from the input element,
**characterized in that** the controller is further configured to, as a reaction to the receipt of the input signal from the input element:
v. , disconnect the main device from at least one of the one or more first sources by stopping the transmission of the first predetermined signal from the main device to the at least one of the one or more first sources,
vi. connect the main device to a second source on the list of sources which is not a first source by initiating transmission of a second predetermined signal to the second source.

12. The system according to claim 11, wherein the receiver is configured for wireless communication with the sources.

13. The system according to claim 11 or 12, wherein the input element is a user operable manual input located on the main device or a casing thereof.
